# EUROPÄISCHE PATENTSCHRIFT

(11) **EP 3 853 065 B1**
(45) Veröffentlichungstag und Bekanntmachung des Hinweises auf die Patenterteilung: **07.06.2023**
(21) Anmeldenummer: 19765449.4
(22) Anmeldetag: 05.09.2019
(51) Int. Cl.: B60N 2/28

(54) **KINDERSITZ ZUR ANBRINGUNG AUF EINEM KRAFTFAHRZEUGSITZ**
CHILD SEAT FOR ATTACHING TO A MOTOR VEHICLE SEAT
SIÈGE POUR ENFANT DESTINÉ À ÊTRE INSTALLÉ SUR UN SIÈGE DE VÉHICULE AUTOMOBILE

(30) Priorität: 17.09.2018 DE 202018105300 U
(43) Veröffentlichungstag der Anmeldung: 28.07.2021
(73) Patentinhaber: CYBEX GmbH, 95448 Bayreuth (DE)
(72) Erfinder: PELESKA, Franz, 1220 Wien (AT)
(74) Vertreter: Meissner Bolte Partnerschaft mbB
(86) Internationale Anmeldenummer: PCT/EP2019/073645
(87) Internationale Veröffentlichungsnummer: WO 2020/057984

(56) Entgegenhaltungen:
- EP-A2- 0 714 806
- EP-A2- 2 072 325
- FR-A1- 2 861 658

## Beschreibung

Die Erfindung betrifft einen Kindersitz zur Anbringung auf einem Kraftfahrzeugsitz nach Anspruch 1.

Im Stand der Technik sind Kindersitze zur Anbringung auf einem Kraftfahrzeugsitz allgemein bekannt. Es ist weiterhin bekannt, dass derartige Kindersitze an bzw. in dem Kraftfahrzeug verankert werden können, beispielsweise durch obere Verankerungsmittel (z. B. Top Tether) und untere Verankerungsmittel (z. B. Isofix). Dabei besteht das Risiko, dass ein Verankerungsmittel (z. B. die Top Tether) nicht korrekt installiert ist, beispielsweise nicht befestigt oder nicht ausreichend gespannt wird. Bei Unfällen impliziert dies ein erhöhtes Verletzungsrisiko.

DE 20 2012 007 314 U1 offenbart einen Kindersitz mit einer Top Tether und einem Anzeigeelement, wobei das Anzeigeelement bei nicht-korrekt installierter Top Tether gut sichtbar und bei korrekt installierter Top Tether nicht sichtbar ist. Hier soll also eine Anzeige das Risiko für eine Fehlbenutzung reduzieren bzw. verhindern. Eine Fehlbenutzung wird letztlich jedoch nicht verhindert.

DE 20 2012 007 313 U1 beschreibt einen Kindersitz mit einer Top Tether und einem beweglichen Element, wobei das bewegliche Element bei nicht-korrekt installierter Top Tether das Einsetzen eines Kindes in den Kindersitz stören soll und bei korrekt installierter Top Tether nicht stören soll. Hier handelt es sich um eine vergleichsweise aufwändige Lösung, die zudem nicht unkritisch ist. Im Rebound nach einem Frontalaufprall hat die Top Tether keine Spannung mehr und das bewegliche Element wird wieder in die störende Position überführt.

FR 2 861 658 A1 beschreibt einen Kindersitz mit einer Top Tether und unterem Befestigungsmittel, wobei ein Warnsignal ausgegeben wird, wenn nur entweder Top Tether oder das untere Befestigungsmittel korrekt installiert sind. Wenn weder Top Tether noch untere Befestigungsmittel oder beide Systeme korrekt installiert sind, erfolgt keine Warnung. Insbesondere wenn es sich bei dem unteren Befestigungsmittel um eine Isofix-Verankerung handelt, ist diese Lösung jedoch vergleichsweise kompliziert und aufwändig, da Isofix-Klinken meist beweglich ausgeführt sind und somit die Anbindung der Sensoren in den Isofix-Klinken die Bewegung mitmachen muss.

EP 3 256 343 A1 beschreibt einen Kindersitz mit einem Sitzbereich und einer Rückenlehne, wobei der Kindersitz von einer kompakten Konfiguration, in der der Sitzbereich an die Rückenlehne geklappt ist, in eine Benutzungskonfiguration, in der ein Kind in dem Kindersitz sitzen kann, und zurück, überführt werden kann. Der Kindersitz hat weiterhin eine Top Tether, und in einer Ausführung kann die Überführung von der kompakten Konfiguration in die Benutzungskonfiguration erst erfolgen, wenn die Top Tether befestigt und ausreichend gespannt ist. Hierbei handelt es sich um eine vergleichsweise aufwändige Lösung, die auch nur bei einer bestimmten Art von Kindersitzen einsetzbar ist (z. B. nicht bei Babyschalen).

EP 2 072 325 A2 offenbart einen Fehlgebrauch-Verhinderungsmechanismus für ein Kinderrückhaltesystem.

EP 0 714 806 A2 offenbart einen Kindersicherheitssitz für ein Kraftfahrzeug, bei dem Verhinderungsmittel derart konfiguriert sind, dass sie das Befestigen eines Verbindungsmittels verhindern können.

Aufgabe der Erfindung ist es, eine einfache, kostengünstige und dennoch sichere Lösung für die Gewährleistung einer möglichst korrekten Verankerung des Kindersitzes vorzuschlagen. Insbesondere soll der Nutzer des Kindersitzes zuverlässig an die korrekte Installation eines Verankerungsmittels (insbesondere des oberen Verankerungsmittels) erinnert werden.

Diese Aufgabe wird vorzugsweise durch die Merkmale des Anspruches 1 gelöst.

Insbesondere wird die Aufgabe gelöst durch einen Kindersitz zur Anbringung auf einem Kraftfahrzeugsitz, umfassend ein erstes Verankerungsmittel zur Verankerung des Kindersitzes (am Fahrzeug) und/oder einer Sitzeinheit des Kindersitzes (an einer Basis) und ein zweites Verankerungsmittel zur Verankerung des Kindersitzes (am Fahrzeug) und/oder einer Sitzeinheit des Kindersitzes (an einer Basis). Das erste Verankerungsmittel ist vorzugsweise ein oberes Verankerungsmittel und das zweite Verankerungsmittel ist vorzugsweise ein unteres Verankerungsmittel. Alternativ kann das erste Verankerungsmittel ein unteres Verankerungsmittel (vorzugsweise zur Verankerung des Kindersitzes am Fahrzeug) und das zweite Verankerungsmittel ein oberes Verankerungsmittel (vorzugsweise zur Verankerung des Kindersitzes am Fahrzeug und/oder zur Verankerung der Sitzeinheit an der Basis) bilden. Das erste Verankerungsmittel ist vorzugsweise ausgebildet, so dass es mindestens eine erste und eine zweite Konfiguration einnehmen kann, wobei bei Einnahme der ersten Konfiguration durch das erste Verankerungsmittel eine Verankerung (bzw. Verankerungsmöglichkeit, insbesondere im Sinne eines Zustandes, bei dem das entsprechende Verankerungsmittel auch tatsächlich seine verankernde Funktion erfüllen kann) des zweiten Verankerungsmittels blockiert ist.

Ein Kerngedanke der Erfindung liegt darin, dass das erste Verankerungsmittel umkonfigurierbar ist und die jeweils vorliegende Konfiguration kausal damit zusammenhängt, inwiefern das zweite Verankerungsmittel (verankernd) wirken kann (also eine Verankerung ausbilden kann). Der kausale Zusammenhang kann mittelbar oder unmittelbar sein. Unter einem mittelbaren Zusammenhang (Wechselwirkung) ist insbesondere zu verstehen, dass die Blockierung nicht aus einem (physischen) Kontakt zwischen erstem und zweitem Verankerungsmittel resultiert, sondern beispielsweise durch eine Übertragungseinrichtung übermittelt wird, in welcher Konfiguration sich das erste Verankerungsmittel befindet und entsprechend das zweite Verankerungsmittel (durch eine separate Blockiereinrichtung, beispielsweise) blockiert wird oder nicht. Unter einem unmittelbaren Zusammenhang bzw. einer unmittelbaren Wechselwirkung (einer unmittelbaren Blockierung) ist insbesondere zu verstehen, dass das erste Verankerungsmittel in physischem Kontakt mit dem zweiten Verankerungsmittel ist, beispielsweise in Eingriff zumindest mit einem Abschnitt des zweiten Verankerungsmittels ist.

Erstes und zweites Verankerungsmittel bilden vorzugsweise entsprechend eine erste bzw. zweite Verankerungseinrichtung. Erstes und/oder zweites Verankerungsmittel können (jeweils) eine eigenständige Baugruppe ausbilden und/oder (ggf. jeweils) ein Gewicht aufweisen, das weniger als 10 %, vorzugsweise weniger als 5 % des Gesamtgewichtes des Kindersitzes beträgt. Sitzflächen des Kindersitzes ausbildende Teile (wie beispielsweise ein Sitzbereich oder eine Rückenlehne per se) sind vorzugsweise nicht Bestandteil des (jeweiligen) Verankerungsmittels. Das erste und/oder zweite Verankerungsmittel kann alternativ auch aus mehreren Baugruppen (jeweils mindestens oder genau zwei Baugruppen) gebildet sein.

Eine Verankerung (bzw. Blockierung derselben) impliziert vorzugsweise nicht, dass ein Sitzbereich gegenüber einer Rückenlehne verschwenkt (oder ggf. auf andere Art und Weise verstellt) wird. Im Allgemeinen kann ein Sitzbereich gegenüber einer Rückenlehne verschwenkbar (ggf. auf andere Art und Weise verstellbar) sein oder nicht (beispielsweise starr mit der Rückenlehne verbunden sein).

Eine Blockierung bzw. Verhinderung der Verankerung (Verankerungsmöglichkeit) bedeutet insbesondere, dass eine (feste) Verankerung unmöglich ist oder zumindest (deutlich) erschwert ist, z. B. dadurch dass dann ein weiteres Betätigungsmittel betätigt werden muss und/oder ein (manueller) Zugang zum jeweiligen Verankerungsmittel eingeschränkt ist.

Unter einem oberen Verankerungsmittel ist insbesondere ein Verankerungsmittel zu verstehen, das teilweise oder vollständig in einem oberen Bereich des Kindersitzes bzw. der Sitzeinheit angeordnet (gehalten oder zumindest umgelenkt) ist (beispielsweise innerhalb der obersten 50 %, vorzugsweise obersten 20 %; wenn die Höhe des Kindersitzes bzw. der Sitzeinheit variabel ist, gilt dies insbesondere für diejenige (Gebrauchs-) Konfiguration des Kindersitzes, in der die maximale Höhe erreicht wird). Falls das obere Verankerungsmittel eine Top Tether umfasst kann diese in dem oberen Bereich des Sitzes gehalten oder zumindest umgelenkt sein. Konkret kann ein Top-Tether-Gurt (oben) umgelenkt und im Inneren des Sitzes nach unten geführt sein. Ggf. kann eine Führung bis (ganz) unten realisiert sein (in diesem Fall kann die Top Tether an dem unteren Verankerungsmittel befestigt sein, insbesondere wenn dieses ohnehin strukturell belastbar sein muss). Das obere Verankerungsmittel, insbesondere die Top Tether kann ggf. lösbar angeordnet/gehalten sein. Das obere Verankerungsmittel kann sich ggf. zwischen einem oberen Halte- oder Umlenkpunkt und einem Verankerungspunkt am Fahrzeug erstrecken, wobei dieser Verankerungspunkt z.B. am Fahrzeugboden (also ggf. sogar unterhalb der unteren Verankerungsmittel) liegen kann.

Unter einem unteren Verankerungsmittel ist vorzugsweise ein Verankerungsmittel zu verstehen, das (teilweise oder vollständig) in einem unteren Bereich des Kindersitzes, bzw. der Sitzeinheit angeordnet (gehalten oder zumindest umgelenkt) ist (beispielsweise in den unteren 50 %, vorzugsweise unteren 20 % angeordnet ist; wenn die Höhe des Kindersitzes bzw. der Sitzeinheit variabel ist, gilt dies insbesondere für diejenige (Gebrauchs-) Konfiguration des Kindersitzes, in der die maximale Höhe erreicht wird).

In jedem Fall kann das obere Verankerungsmittel (zumindest überwiegend, vorzugsweise vollständig) oberhalb des unteren Verankerungsmittels liegen (zumindest insoweit es seinen Befestigungspunkt am Kindersitz bzw. der Sitzeinheit betrifft). Eine Anordnung des oberen Verankerungsmittels (also insbesondere die Stelle, an der das obere Verankerungsmittel an den Kindersitz bzw. der Sitzeinheit angeordnet bzw. befestigt ist) kann mindestens 10 cm, vorzugsweise mindestens 30 cm, noch weiter vorzugsweise mindestens 50 cm oberhalb einer Anordnung des unteren Verankerungsmittels liegen (bei Kindersitzen bzw. Sitzeinheiten, die verschieden hoch eingestellt werden können, gilt dies vorzugsweise zumindest für die Konfiguration, bei der der Kindersitz bzw. die Sitzeinheit die größte Höhe hat).

Besonders bevorzugt handelt es sich bei dem oberen Verankerungsmittel um eine Top Tether und bei dem unteren Verankerungsmittel um eine Isofix-Verankerung.

Der Kindersitz kann mit oder ohne Basis(-Teil) ausgebildet sein. Wenn der Kindersitz mit Basis ausgebildet ist, umfasst dieser vorzugsweise eine Sitzeinheit, die (lösbar und/oder verstellbar, beispielsweise rotierbar) gegenüber der Basis konfiguriert ist. Die Sitzeinheit umfasst dann vorzugsweise den eigentlichen Sitz, also insbesondere einen Sitzbereich und eine Rückenlehne (die, beispielsweise in Form einer Babyschale, nicht unbedingt strukturell voneinander abgegrenzt sein müssen).

Der Kindersitz bzw. die Sitzeinheit kann im Allgemeinen mit strukturell voneinander abgegrenztem Sitzbereich und Rückenlehne ausgebildet sein. Sitzbereich und Rückenlehne können gegeneinander verstellbar (z. B. verschwenkbar) sein oder nicht. Bei dem Kindersitz kann es sich um eine Babyschale oder um einen "klassischen" Kindersitz für größere Kinder handeln. Insbesondere wenn der Sitz als Babyschale ausgebildet ist, kann er ggf. (nur) eine einteilige Schale zur Aufnahme des Babys bzw. Kindes und ein eigenes Gurtsystem, ggf. eine Kopfstütze und ggf. weitere Komponenten, umfassen.

Insoweit Rückenlehne (Rückenbereich) und Sitzbereich strukturell voneinander abgegrenzt sind, kann diese Abgrenzung beispielsweise durch einen Knick (oder Ähnliches) definiert sein.

Dadurch, dass eine Benutzung des zweiten Verankerungsmittels vorzugsweise kausal von einer Konfiguration des ersten Verankerungsmittels abhängt, kann das Risiko für Fehlbedienungen zumindest reduziert werden. Im allgemeinen Fall wird dadurch nämlich zumindest erreicht (bevorzugte Konstellationen werden weiter unten beschrieben), dass der Benutzer in zumindest einer Konfiguration des ersten Verankerungsmittels überhaupt darauf aufmerksam gemacht wird, dass diese bestimmte Konfiguration vorliegt (nämlich durch Blockierung der Wirkung des zweiten Verankerungsmittels). Dies fördert (selbst im allgemeinsten Fall) zumindest die Kenntnisnahme des Benutzers, dass überhaupt hinsichtlich des ersten Verankerungsmittels verschiedene Konfigurationen relevant sein können (bzw. dass das erste Verankerungsmittel überhaupt "existiert"). Dadurch wird zumindest die Wahrscheinlichkeit erhöht, dass das erste Verankerungsmittel (korrekt) benutzt wird. Dies ist besonders dann vorteilhaft, wenn das zweite Verankerungsmittel per se ausreicht oder zumindest suggeriert, dass mit Verankerung des zweiten Verankerungsmittels eine ausreichende (sichere) Verankerung des Kindersitzes bzw. der Sitzeinheit realisiert ist.

Erstes und zweites Verankerungsmittel sind ggf. strukturell voneinander getrennt (so dass eine Verbindung beispielsweise nur über eine Sitzschale bzw. Rückenlehne und/oder Sitzbereich geschaffen ist, aber keine unmittelbare Verbindung vorliegt) und/oder funktionell voneinander getrennt (abgesehen von der Wechselwirkung zwischen der Konfiguration des ersten Verankerungsmittels einerseits und der Blockierung oder Nicht-Blockierung der Wirkung des zweiten Verankerungsmittels andererseits). Erstes und zweites Verankerungsmittel sind vorzugsweise nicht durch einen Gurt miteinander verbunden.

Vorzugsweise kann das erste Verankerungsmittel eine dritte Konfiguration einnehmen. In der dritten Konfiguration des ersten Verankerungsmittels ist eine Verankerung (bzw. Wirkung) des zweiten Verankerungsmittels vorzugsweise nicht blockiert (die dritte Konfiguration entspricht also diesbezüglich vorzugsweise der zweiten Konfiguration). Unabhängig davon, ob eine dritte Konfiguration vorliegt, handelt es sich bei der zweiten Konfiguration vorzugsweise um eine Konfiguration des ersten Verankerungsmittels, bei der eine Verankerung bzw. Wirkung des zweiten Verankerungsmittels nicht blockiert ist/wird.

Das zweite Verankerungsmittel kann ausgebildet sein, so dass es mindestens eine erste und eine zweite Konfiguration einnehmen kann. Dabei entspricht die erste Konfiguration vorzugsweise einer Nichtbenutzungskonfiguration, in der die zweiten Verankerungsmittel den Kindersitz bzw. die Sitzeinheit nicht verankern, und/oder die zweite Konfiguration entspricht vorzugsweise einer Benutzungskonfiguration, in der die zweiten Verankerungsmittel den Kindersitz bzw. die Sitzeinheit verankern.

Weiterhin kann das zweite Verankerungsmittel ggf. eine dritte Konfiguration einnehmen. In der dritten Konfiguration des zweiten Verankerungsmittels ist vorzugsweise eine Verankerung des zweiten Verankerungsmittels ermöglicht (ggf. aber nicht realisiert). Unter einer Ermöglichung einer Verankerung des zweiten Verankerungsmittels ist zu verstehen, dass dieses so konfiguriert ist, dass eine Verankerung durch den Benutzer (durch Verbinden des zweiten Verankerungsmittels mit seinem Installationsort bzw. entsprechenden Installationsorten) durchgeführt werden kann, also das zweite Verankerungsmittel nicht grundsätzlich so konfiguriert (beschaffen) ist, dass eine derartige (feste) Verbindung bzw. Befestigung verhindert ist.

Erste und/oder dritte Konfiguration des ersten und/oder zweiten Verankerungsmittels sind vorzugsweise Nicht-Benutzungskonfigurationen. Unter einer Nicht-Benutzungskonfiguration ist vorzugsweise zu verstehen, dass das Verankerungsmittel so konfiguriert ist, dass es nicht verankert ist bzw. nicht verankernd wirkt. Bei der zweiten Konfiguration des ersten und/oder zweiten Verankerungsmittels handelt es sich vorzugsweise um eine Benutzungskonfiguration, insbesondere in dem Sinne, dass das Verankerungsmittel tatsächlich verankert ist bzw. verankernd wirkt.

Unter einer Konfiguration des jeweiligen Verankerungsmittels kann ein inhärenter Zustand desselben verstanden werden (beispielsweise eine dem Verankerungsmittel inhärente mechanische Spannung und/oder eine Stellung von Komponenten des jeweiligen Verankerungsmittels gegeneinander) und/oder um einen Zustand des jeweiligen Verankerungsmittels in Bezug auf eine Komponente außerhalb des Verankerungsmittels (beispielsweise einer weiteren Komponente des Kindersitzes und/oder der Sitzeinheit und/oder des Fahrzeuges). Falls es sich bei den verschiedenen Konfigurationen um Konfigurationen handelt, die durch eine Stellung gegenüber dem Fahrzeug oder einer sonstigen, in Bezug auf den Kindersitz als extern anzusehenden, Komponente definiert sind, kann dies ggf. implizieren, dass mindestens eine entsprechende Sensoreinrichtung des Kindersitzes per se diese unterschiedlichen Stellungen anzeigt, so dass diese unterschiedlichen Konfigurationen/Stellungen am Kindersitz selbst bzw. der Sitzeinheit selbst erkennbar sind.

Der Kindersitz kann einen ersten (hinteren bzw. oberen) Abschnitt zur Anlage an eine Rückenlehne des Fahrzeugs aufweisen sowie einen zweiten (unteren) Abschnitt zur Anlage an einer Sitzfläche des Fahrzeugsitzes. Vorzugsweise können sich sowohl das mindestens eine erste (obere) Verankerungsmittel als auch das mindestens eine zweite (untere) Verankerungsmittels jeweils entweder in einer ersten Konfiguration (Nicht-Benutzungskonfiguration) befinden, in der das entsprechende Verankerungsmittel den Kindersitz nicht am Fahrzeug befestigt oder in einer zweiten Konfiguration (Benutzungskonfiguration) befinden, in der das entsprechende Verankerungsmittel den Kindersitz am Fahrzeug befestigt. Vorzugsweise verhindert das mindestens eine erste (obere) Verankerungsmittel in seiner ersten Konfiguration eine Überführung des mindestens einen zweiten (unteren) Verankerungsmittels von der ersten in die zweite Konfiguration, wobei weiter vorzugsweise das mindestens eine erste (obere) Verankerungsmittel zudem eine dritte Konfiguration einnehmen kann, in der es weder den Kindersitz am Fahrzeug befestigt noch die Überführung des mindestens einen zweiten (unteren) Verankerungsmittels verhindert. Es sollte also zur Installation des Kindersitzes (bzw. der Sitzeinheit) insbesondere sichergestellt sein, dass sich das mindestens eine erste (obere) Verankerungsmittel nicht in der ersten Konfiguration befindet.

Das erste Verankerungsmittel umfasst vorzugsweise einen Gurt und/oder eine Top Tether (bzw. ist als solcher/solche ausgebildet). Die Top Tether umfasst vorzugsweise einen Gurt, ein Element zur Verbindung mit dem Fahrzeug, z.B. einen Haken, und ggf. Indikatoren. Erste und zweite Konfiguration des ersten Verankerungsmittels können sich dann vorzugsweise jeweils durch eine (Mindest-) Spannung des Gurtes (ggf. des Gurtes der Top Tether) auszeichnen (insbesondere gegenüber einer/der dritten Konfiguration). In der ersten und/oder zweiten Konfiguration kann beispielsweise ein (mechanischer) Spannungswert des Gurtes (an einer bestimmten Stelle) oberhalb (oder ggf., gemäß einer ersten Alternative, auf) eines (einem) Schwellenwert/es liegen. Analog kann sich eine/die dritte Konfiguration dadurch auszeichnen, dass der Schwellenwert unterschritten (oder ggf., gemäß einer zweiten Alternative, eingenommen) wird.

Das erste Verankerungsmittel kann (mit einem proximalen Ende) insbesondere am oder in der Nähe des oberen Endes des Kindersitzes bzw. der Sitzeinheit angeordnet (insbesondere befestigt und/oder umgelenkt) sein. Weiterhin kann das erste (obere) Verankerungsmittel (insbesondere an einem distalen Ende) mindestens ein erstes Befestigungsmittel aufweisen, das mit einem in/an dem Fahrzeug bzw. der Basis befindlichen ersten Gegenstück zusammenwirken kann (um letztlich die Verankerung zu realisieren).

Das zweite Verankerungsmittel kann eine Verankerung mit mindestens einem Verankerungsarm, insbesondere eine Isofix-Verankerung, umfassen. Konkret kann das mindestens eine zweite (untere) Verankerungsmittel zwei (starre) Verankerungsarme aufweisen, an deren Enden sich zweite Befestigungsmittel befinden, die mit sich am Fahrzeug bzw. an der Basis befindlichen zweiten Gegenstücken zusammenwirken können. Insbesondere kann es sich dabei um Isofix-Arme handeln.

In Ausführungsformen kann der mindestens eine Verankerungsarm (die mindestens oder genau zwei Verankerungsarme) verschieblich hin zu und weg von der Rückenlehne (des Kindersitzes bzw. der Sitzeinheit) in dafür vorgesehene Führungselementen an der Unterseite des Kindersitzes (bzw. der Sitzeinheit) gelagert sein, wobei die erste Konfiguration des Verankerungsarms (der Verankerungsarme) vorzugsweise einer in den Kindersitz (weg von der Rückenlehne des Fahrzeugsitzes) zurückgezogenen Position entspricht, in der weiter vorzugsweise die zweiten Befestigungsmittel nicht mit den zweiten Gegenstücken (bzw. mit dem mindestens einen zweiten Gegenstück) zusammenwirken können. Die zweite Konfiguration des mindestens einen Verankerungsarms (der Verankerungsarme) kann einer in Richtung der Rückenlehne des Fahrzeugsitzes ausgefahrenen Position entsprechen, in der die zweiten Befestigungsmittel mit dem mindestens einen zweiten (ggf. den beiden zweiten) Gegenstück(en) zusammenwirken.

Die Verankerungsarme (Isofix-Arme) können miteinander verbunden sein, um sich ggf. gemeinsam (zur Rückenlehne des Fahrzeugsitzes bzw. der Basis hin oder von dieser weg) zu bewegen, was jedoch nicht sein muss.

Das erste (obere) Verankerungsmittel kann vorzugsweise in seiner ersten Konfiguration die Bewegung von mindestens einem Verankerungsarm (dem mindestens einen Verankerungsarm) aus dessen erster Position bzw. Konfiguration (und in dessen zweite oder dritte Position bzw. Konfiguration) verhindern. Dazu kann das erste Befestigungsmittel des ersten (oberen) Verankerungsmittels beispielsweise in ein Führungselement von mindestens einem Verankerungsarm (dem mindestens einen Verankerungsarm) eingreifen, so dass eine Bewegung des entsprechenden Verankerungsarmes aus der ersten Konfiguration heraus blockiert wird. Vorzugsweise blockiert der Verankerungsarm (die Verankerungsarme) in der zweiten bzw. dritten Konfiguration des zweiten Verankerungsmittels (der unteren Verankerungselemente) eine Eingriffsposition für das (mindestens eine) erste Befestigungsmittel in das bzw. die Führungselemente.

In alternativen Ausführungsformen kann die erste Konfiguration des zweiten (unteren) Verankerungsmittels vorzugsweise dadurch erreicht werden, dass das (mindestens eine) erste Befestigungsmittel des zweiten (oberen) Verankerungsmittels unmittelbar in mindestens eines der zweiten Befestigungsmittel (des jeweiligen Verankerungsarms) eingreift und somit ein Zusammenwirken des entsprechenden zweiten Befestigungsmittels mit dem zugehörigen zweiten Gegenstück verhindert.

In Ausführungsformen kann das zweite Verankerungsmittel eine Gurt-Verankerung umfassen. Unter einer Gurt-Verankerung ist insbesondere eine Einrichtung zu verstehen, die einen Gurt (-abschnitt) aufweist und/oder ausgebildet ist, einen Gurt (-abschnitt) aufzunehmen (zu führen). Insbesondere kann die Gurt-Verankerung also eine Gurtführung und/oder einen Gurt umfassen. Konkret kann die Gurt-Verankerung für ein (bzw. als ein) Latch-System ausgebildet sein.

Konkret kann das zweite (untere) Verankerungsmittel eine Gurtführung aufweisen, die dazu vorgesehen ist, mindestens einen Gurt zur Befestigung des Kindersitzes an einem Fahrzeugsitz (oder der Sitzeinheit an der Basis) zu führen. Bei diesem Gurt kann es sich um einen fahrzeugeigenen Gurt (Beckengurtabschnitt und/oder Diagonalgurtabschnitt) handeln oder auch um einen zum Kindersitz gehörigen Gurt, beispielsweise entsprechend dem Latch-System. Wenn erstes (oberes) und zweites (unteres) Verankerungsmittel in ihrer (jeweiligen) ersten Konfiguration sind, kann das erste Befestigungsmittel des ersten (oberen) Verankerungsmittels vorzugsweise in eine dafür vorgesehene Aufnahme in der Gurtführung eingreifen, um damit die Aufnahme des Gurtes in der Gurtführung zu blockieren. Bevorzugt soll ein Eingreifen des ersten Befestigungsmittels (des ersten/oberen Verankerungsmittels) in die Aufnahme der Gurtführung nach Aufnahme des Gurtes in der Gurtführung nicht mehr möglich sein (verhindert sein).

In Ausführungsformen handelt es sich bei dem Kindersitz um einen Sitz, der nicht (lösbar) an einer Basis, sondern (unmittelbar) am Fahrzeug bzw. Fahrzeugsitz angebracht wird.

Der Kindersitz kann auch eine Sitzeinheit und eine Basis umfassen, wobei erstes (oberes) und zweites (unteres) Verankerungsmittel vorzugsweise jeweils in bevorzugten Ausführungsformen (jeweils) an der Basis angebracht sind. In derartigen Ausführungsformen kann die Sitzeinheit von dem ersten (oberen) und zweiten (unteren) Verankerungsmittel ggf. unabhängige Sitzbefestigungsmittel zur (lösbaren) Befestigung der Sitzeinheit an der Basis aufweisen.

Weiterhin kann der Kindersitz auch eine Sitzeinheit und eine Basis aufweisen, wobei sich das mindestens eine erste (obere) Verankerungsmittel an der Sitzeinheit befindet und das zweite (untere) Verankerungsmittel durch Sitzbefestigungsmittel zur (lösbaren) Befestigung der Sitzeinheit an der Basis realisiert sein können. Weitere Befestigungsmittel können dann ggf. zur Befestigung der Basis am Fahrzeug (bzw. Fahrzeugsitz) vorgesehen sein. Wenn in diesem Zusammenhang erstes (oberes) und zweites (unteres) Verankerungsmittel in ihrer ersten Konfiguration sind, kann das mindestens eine erste Befestigungsmittel (des ersten/oberen Verankerungsmittels) vorzugsweise unmittelbar in das zweite (untere Verankerungsmittel) eingreifen und dessen Zusammenwirken mit einem entsprechenden Gegenstück (entsprechenden Gegenstücken) verhindern bzw. blockieren. Das zweite (untere) Verankerungsmittel kann beispielsweise mindestens eine Stange aufweisen, wobei das mindestens eine zugehörige Gegenstück, mindestens einen Schnapphaken aufweisen kann (oder umgekehrt).

Vorzugsweise ist mindestens ein Sensormittel, weiter vorzugsweise mindestens ein Kontaktschalter, noch weiter vorzugsweise mindestens ein Kippschalter, zur Feststellung vorgesehen, ob sich das jeweilige Verankerungsmittel in einer bestimmten Konfiguration befindet. Besonders bevorzugt ist das Sensormittel konfiguriert, festzustellen, ob sich das erste (obere) Verankerungsmittel in der dritten Konfiguration befindet. Alternativ oder zusätzlich kann das Sensormittel auch konfiguriert sein (bzw. weitere entsprechende Sensormittel vorgesehen sein), um festzustellen, ob sich das erste und/oder das zweite Verankerungsmittel in der ersten und/oder zweiten Konfiguration befindet/befinden. Wenn entsprechende Informationen durch das Sensormittel beschafft werden können, wird insgesamt die Sicherheit verbessert. Beispielsweise kann eine Feststellung dahingehen, dass sich das erste (obere) Verankerungsmittel in seiner dritten Konfiguration befindet (in der es insbesondere eine Verankerung durch das zweite Verankerungsmittel erlaubt, jedoch selbst nicht verankernd wirkt bzw. nicht fest verankernd wirkt) für eine entsprechende Auswertung und/oder Anzeige herangezogen werden (insbesondere für eine entsprechende Alarmeinrichtung, wie weiter unten weiter erläutert).

Konkret kann es sich bei dem Sensormittel um ein Sensormittel handeln, das konfiguriert ist, das Vorliegen einer vordefinierten mechanischen (Mindest-) Spannung zu detektieren. Ausführungsgemäß kann das Sensormittel einen Schalter, vorzugsweise Kontaktschalter, noch weiter vorzugsweise Kippschalter handeln, der insbesondere bei Über- und/oder Unterschreiten der vordefinierten (Mindest-) Spannung auslöst. Wenn eine Alarmeinrichtung vorgesehen ist, kann das Sensormittel (der Schalter) vorzugsweise (direkt) die Alarmeinrichtung ein- und/oder ausschalten, so dass diese eine Alarm- (oder sonstig) Anzeige generiert bzw. nicht mehr generiert. Selbstverständlich sind prinzipiell auch andere Arten von Sensormitteln geeignet zur Steuerung der Alarmeinrichtung, wobei die Steuerung auch rein elektronisch erfolgen kann.

In konkreten Ausführungsformen kann einem Gurt (-abschnitt) des ersten (oberen) Verankerungsmittels eine Feder, insbesondere eine Dreh- bzw. Schenkelfeder, zugeordnet sein. Ein erster Schenkel der Schenkelfeder ist dann vorzugsweise am Gurt (-abschnitt) abgestützt (z. B. über einen Bügelabschnitt bzw. einen Abschnitt, der zumindest im Wesentlichen parallel zu einer Drehachse der Dreh- bzw. Schenkelfeder verläuft) bzw. gelagert, und ein zweiter Schenkel ist ortsfest gegenüber einem Hauptkörper des Kindesitzes bzw. der Sitzeinheit und/oder am Sensormittel (Schalter) abgestützt bzw. gelagert. Eine Federkonstante bzw. eine benötigte Kraft zur Betätigung des Sensormittels (Schalters) sind dann vorzugsweise so aufeinander abgestimmt, dass der Gurt (-abschnitt) durch den ersten Schenkel zu einem Umweg gezwungen wird, wenn die (Mindest-) Spannung nicht anliegt. Wird die (Mindest-) Spannung jedoch überschritten, so führt diese zu einer Kraft auf den ersten Schenkel, die durch die Feder übertragen und mittels des zweiten Schenkels auf das Sensormittel (Schalter) wirkt, so dass dieses (dieser) die Alarmeinrichtung ausschaltet. Wird die (Mindest-) Spannung wieder unterschritten, so kann die Alarmeinrichtung ggf. durch den umgekehrten Prozess wieder eingeschaltet werden.

Vorzugsweise ist eine Alarmeinrichtung vorgesehen, die weiter vorzugsweise so konfiguriert ist, einen Alarm zu generieren, wenn (ggf. nur in diesem Falle) sich das erste Verankerungsmittel in seiner dritten, insbesondere als Nicht-Benutzungskonfiguration ausgebildeten, Konfiguration befindet. Bei dem Alarm kann es sich beispielsweise um einen akustischen Alarm und/oder einen visuellen Alarm handeln. Ein visueller Alarm kann farbige, insbesondere rote und grüne, Anzeigeelemente umfassen und/oder Leuchtmittel (z.B. LEDs).

Das erste Verankerungsmittel kann konfiguriert sein, den Kindersitz an dem Fahrzeug zu verankern und/oder eine Sitzeinheit (eines Kindersitzes mit Basis) an der Basis zu verankern. Alternativ oder zusätzlich kann Entsprechendes für das zweite Verankerungsmittel gelten. Wenn eine Basis vorgesehen ist, kann das erste Verankerungsmittel die Basis (und damit mittelbar die Sitzeinheit) an dem Fahrzeug verankern oder die Sitzeinheit (und damit mittelbar die Basis) an dem Fahrzeug verankern. Alternativ oder zusätzlich kann Entsprechendes für das zweite Verankerungsmittel gelten.

Die Konfigurationen des (jeweiligen) Verankerungsmittels können sich durch verschiedene mechanische Spannungen, insbesondere Gurtspannungen und/oder durch verschiedene Stellungen mindestens eines Elements des jeweiligen Verankerungsmittels, insbesondere gegenüber einem weiteren Element des Verankerungsmittels und/oder einem weiteren Element außerhalb des Verankerungsmittels, beispielsweise des Kindersitzes und/oder Installationsortes, unterscheiden.

Mindestens ein erstes Befestigungsmittel kann zum Befestigen des ersten Verankerungsmittels am Fahrzeug und/oder der Basis vorgesehen sein, wobei das erste Befestigungsmittel vorzugsweise in einer ersten Stellung das zweite Verankerungsmittel (mittelbar oder unmittelbar) - ggf. mindestens ein zweites Befestigungsmittel des zweiten Verankerungsmittels (mittelbar oder unmittelbar) - blockiert und in einer zweiten Stellung vorzugsweise nicht blockiert.

In Ausführungsformen ist dem ersten (oberen) Verankerungsmittel eine Spannungseinbringungseinrichtung, insbesondere eine Gurtstraffeinrichtung, zugeordnet, zum Einbringen einer (mechanischen) Spannung in das Verankerungsmittel, insbesondere bei dessen Verankerung (Herstellung der Verankerung). Wenn das erste (obere) Verankerungsmittel einen Gurt (-abschnitt) umfasst, können die erste und die zweite Konfiguration des ersten (oberen) Verankerungsmittels zusätzlich noch vorteilhaft an eine (Mindest-) Spannung des Gurt (-abschnittes) gekoppelt sein. Weiter vorzugsweise kann die (Mindest-) Spannung nicht allein durch die Gewichtskraft des ersten (oberen) Verankerungsmittels aufgebracht werden.

In Ausführungsformen kann das erste (obere) Verankerungsmittel eine (insbesondere manuell betätigbare) Gurtstraffeinrichtung aufweisen. Im einfachsten Fall kann es sich um eine (von Hosenträgergurten oder auch Rucksäcken bekannte) auf Reibung beruhende, (rein) mechanische Lösung handeln. Auch Ratschen oder andere Ausgestaltungen sind vorstellbar. Mittels der Gurtstraffeinrichtung kann der Gurt (-abschnitt) des ersten (oberen) Verankerungsmittels gestrafft werden, wenn das erste (obere) Verankerungsmittel den Kindersitz am Fahrzeug (bzw. die Sitzeinheit an der Basis bzw. dem Fahrzeug) befestigt oder wenn das erste (obere) Verankerungsmittel die Überführung des zweiten (unteren) Verankerungsmittels von dessen erster in dessen zweite Position (Konfiguration) verhindert (und beispielsweise mit dem Führungselement oder der Gurtführung des zweiten (unteren) Verankerungsmittels zusammenwirkt). Dadurch kann beispielsweise eine notwendige (Mindest-) Spannung aufgebracht werden.

Die obengenannte Aufgabe wird weiterhin gelöst durch ein Kraftfahrzeug mit einem Sitz der obigen Art.

Die obengenannte Aufgabe wird weiterhin gelöst durch die Verwendung eines ersten Verankerungsmittels eines Kindersitzes, insbesondere der obigen Art, zum (mittelbaren oder unmittelbaren) Blockieren einer Verankerung bzw. Verankerungsmöglichkeit eines zweiten Verankerungsmittels des Kindersitzes. Vorzugsweise ist das erste Verankerungsmittel ein oberes Verankerungsmittel und das zweite Verankerungsmittel ein unteres Verankerungsmittel. Alternativ kann das erste Verankerungsmittel ein unteres Verankerungsmittel und das zweite Verankerungsmittel ein oberes Verankerungsmittel bilden.

Die obengenannte Aufgabe wird weiterhin gelöst durch ein Verfahren zum Installieren eines Kindersitzes, insbesondere der obigen Art, in einem Kraftfahrzeug, insbesondere der obigen Art, wobei der Kindersitz ein erstes Verankerungsmittel zur Verankerung des Kindersitzes (am Fahrzeug) und/oder eine Sitzeinheit des Kindersitzes (an einer Basis) und ein zweites Verankerungsmittel zur Verankerung des Kindersitzes (am Fahrzeug) und/oder eine Sitzeinheit des Kindersitzes (an einer Basis) umfasst, wobei das erste Verankerungsmittel vorzugsweise ein oberes Verankerungsmittel und das zweite Verankerungsmittel vorzugsweise ein unteres Verankerungsmittel bilden (oder umgekehrt das erste Verankerungsmittel ein unteres Verankerungsmittel und das zweite Verankerungsmittel ein oberes Verankerungsmittel bilden), wobei das zweite Verankerungsmittel zunächst derart blockiert ist (wird), dass eine Verankerung desselben verhindert ist (wird), wobei daraufhin eine Konfigurationsänderung des ersten Verankerungsmittels erfolgt, so dass die Verankerung des zweiten Verankerungsmittels nicht mehr verhindert wird.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird.

Hierbei zeigen:
- Fig. 1: eine Seitenansicht (im Schnitt) eines erfindungsgemäßen Kindersitzes auf einem Fahrzeugsitz;
- Fig. 2: eine Vergrößerung eines Ausschnitts aus Fig. 1;
- Fig. 3: eine Schrägansicht des Ausschnittes gemäß Fig. 2;
- Fig. 4: den Kindersitz gemäß Fig. 1 in einer von Fig. 1 abweichenden Konfiguration (ohne Fahrzeugsitz) in einer Ansicht von hinten;
- Fig. 5: den Kindersitz gemäß Fig. 4 in einer Seitenansicht (im Schnitt);
- Fig. 6: einen vergrößerten Ausschnitt aus Fig. 5 in einer Schrägansicht;
- Fig. 7: den Kindersitz gemäß Fig. 1 in einer weiteren, von Fig. 1 abweichenden Konfiguration;
- Fig. 8: einen vergrößerten Ausschnitt aus Fig. 7;
- Fig. 9: eine Schrägansicht des Ausschnittes aus Fig. 8.

In der nachfolgenden Beschreibung werden für gleiche und gleichwirkende Teile dieselben Bezugsziffern verwendet.

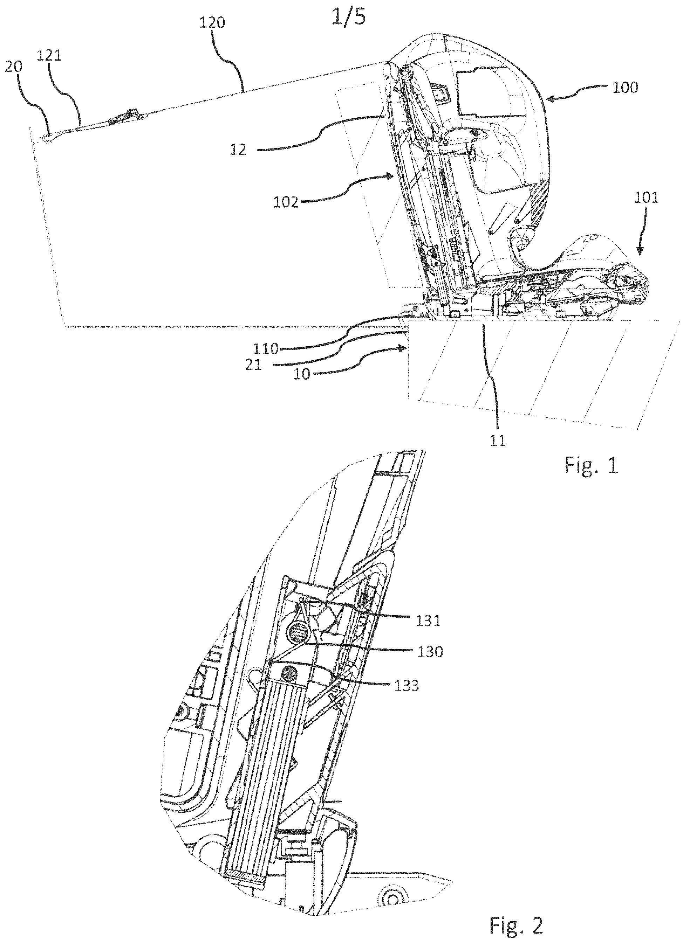

Gemäß Fig. 1 ist ein erfindungsgemäßer Kindersitz 100 auf einem Fahrzeugsitz 10 angeordnet. Der Fahrzeugsitz weist eine Sitzfläche 11 und eine Rückenlehne 12 auf. Weiterhin sind (am Fahrzeugsitz oder an sonstigen Komponenten des Fahrzeuges) mindestens ein erstes Gegenstück 20 und mindestens ein zweites Gegenstück 21 (für die Zusammenwirkung mit entsprechenden Verankerungsmitteln) vorgesehen. Bei den Gegenstücken 20, 21 handelt es sich vorzugsweise um Komponenten/Strukturen, die geeignet sind, die entsprechenden Verankerungsmittel so aufzunehmen, dass das Verankerungsmittel und damit der Kindersitz (sicher) verankert werden kann.

Der Kindersitz 100 umfasst einen ersten Abschnitt 101 (Sitzabschnitt), einen zweiten Abschnitt 102 (Rückenlehne), ein erstes (oberes) Verankerungsmittel 120 mit ersten Befestigungsmitteln 121 und ein zweites (unteres) Verankerungsmittel 110 mit zweiten Befestigungsmitteln 111.

Gemäß Fig. 1 kann es sich bei dem zweiten Verankerungsmittel vorzugsweise um eine Isofix-Verankerung handeln. Alternativ kann es sich bei dem zweiten Verankerungsmittel um eine Gurt-Verankerung (Latch-System) handeln.

Das erste Verankerungsmittel ist vorzugsweise eine Top Tether. Diese kann beispielsweise am Dach des Fahrzeugs, auf einer (hinteren) Ablage, einer Rückwand (wie in Fig. 1) oder einem Boden (eines hinteren Raums) angeordnet werden.

Das erste Verankerungsmittel (120) ist so ausgebildet, dass es mindestens eine erste und eine zweite Konfiguration einnehmen kann, wobei bei Einnahme der ersten Konfiguration durch das erste Verankerungsmittel (120) eine Verankerung (Verankerungsmöglichkeit) des zweiten Verankerungsmittels (110) blockiert ist.

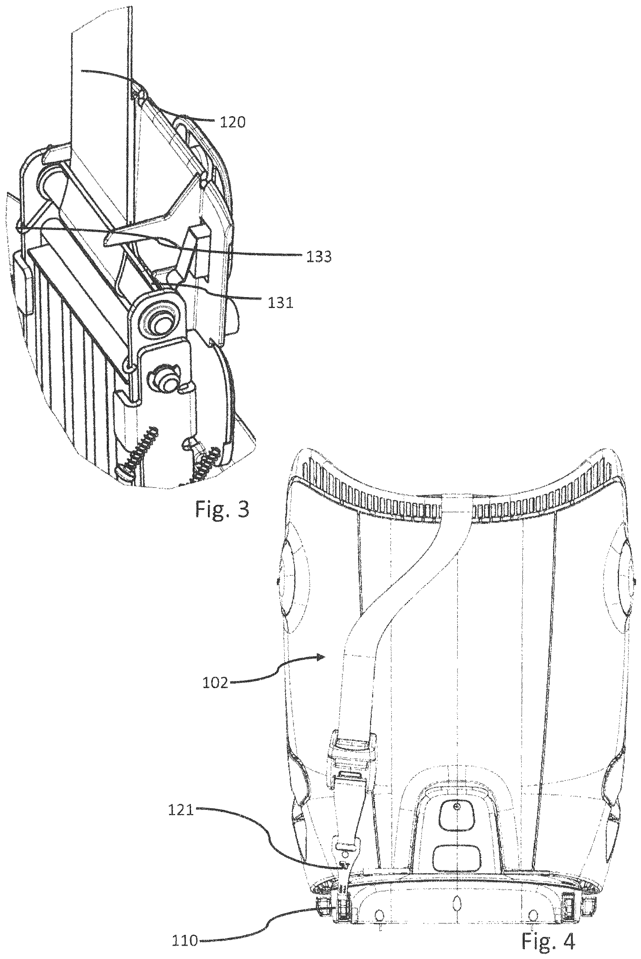

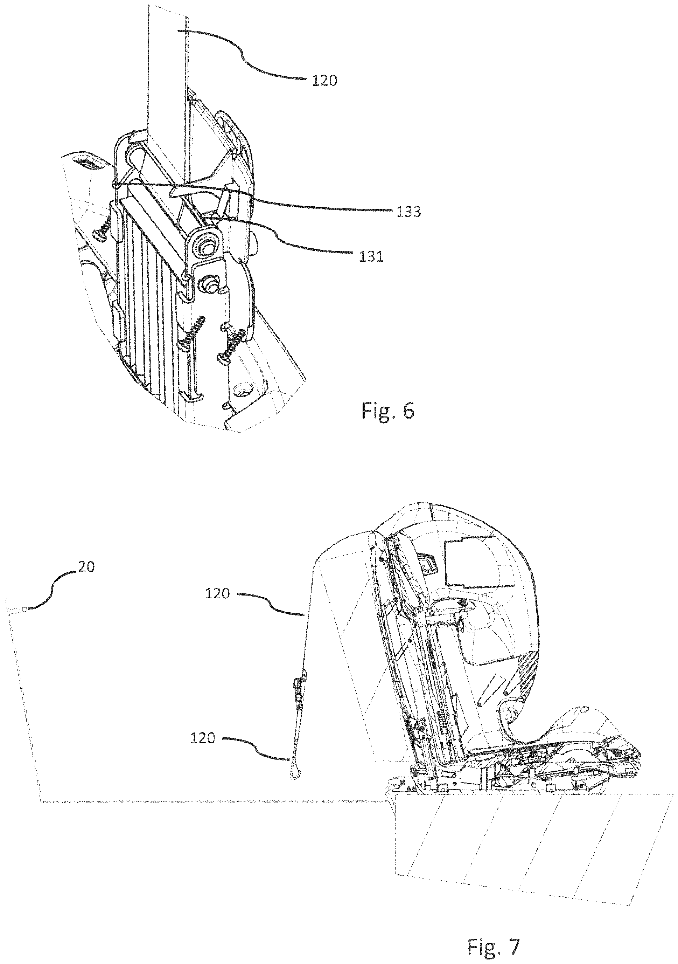

Fig. 4-6 zeigen die erste Konfiguration des ersten Verankerungsmittels 120, Fig. 1-3 zeigen die zweite Konfiguration des ersten Verankerungsmittels 120 und Fig. 7-9 zeigen eine dritten Konfiguration des ersten Verankerungsmittels 120.

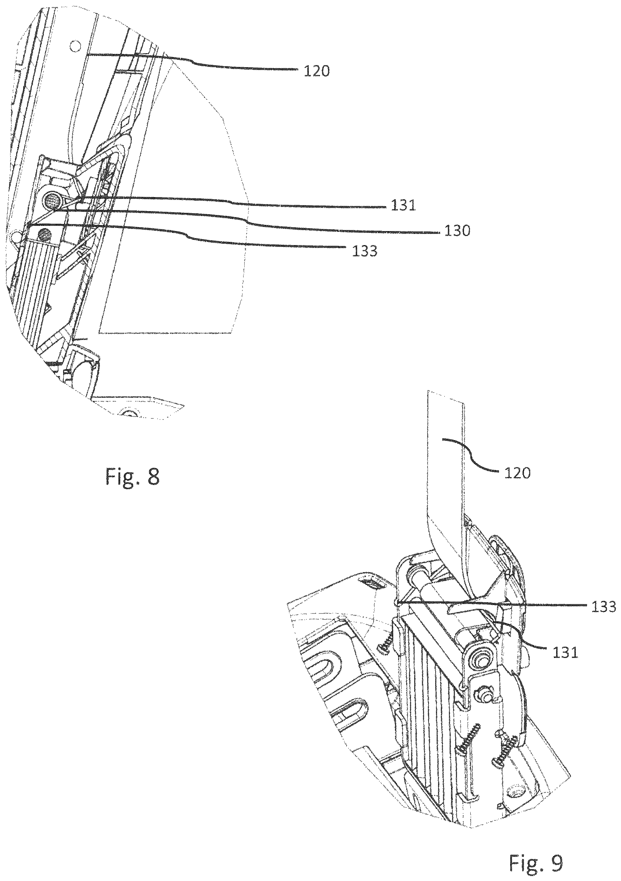

In der zweiten Konfiguration gemäß Fig. 1-3 ist das erste Verankerungsmittel 120 über das Befestigungsmittel 121 am Fahrzeug fixiert. Dadurch ist das erste Verankerungsmittel 120 (z. B. ein Gurt oder Gurtabschnitt desselben) unter einer (mechanischen) Spannung. Dies hat zur Folge, dass eine Feder 130 (siehe Fig. 2 und 3) vorgespannt wird. Dadurch wird ein bewegliches Element 131 (hier beispielsweise als Bestandteil der Feder bzw. integral an diese angeformt, optional in Form eines Bügels bzw. einen Steg umfassend) in eine bestimmte Position gebracht, die von der Ruheposition (wie beispielsweise in Fig. 8 und 9 gezeigt) abweicht. Diese Verlagerung kann nun entsprechend (beispielsweise durch einen Kontaktschalter und/oder Druckschalter, beispielsweise in Zusammenwirkung mit dem beweglichen Element 131 und/oder in Zusammenwirkung mit einem, insbesondere ortsfesten Federabstützabschnitt 133 der Feder) detektiert werden (nicht im Einzelnen gezeigt). Insofern kann über eine entsprechende Sensoreinrichtung festgestellt werden, ob das erste Verankerungsmittel 120 unter einer mechanischen Spannung steht. Konkret kann dies zur Folge haben, dass keine Indikation (z. B. akustischer Alarm- und/oder Lichtsignal) erfolgt. Im Unterschied dazu kann in der entspannten Stellung gemäß Fig. 7-9 eine entsprechende Indikation (Alarm und/oder optisches Signal) erfolgen, so dass der Benutzer erkennt, dass hier eine bestimmte Konfiguration des ersten Verankerungsmittels eingenommen ist (nämlich die dritte Konfiguration). Weiterhin erkennt man, dass das zweite Verankerungsmittel 110 in der zweiten Konfiguration gemäß Fig. 1-3 verankernd wirken kann bzw. eine Verankerung ausbildet (konkret in Zusammenwirken mit dem zweiten Gegenstück 21). Die zweite Konfiguration entspricht dabei einer Benutzungskonfiguration.

In der ersten Konfiguration des ersten Verankerungsmittels 120 (siehe Fig. 4-6) ist das erste Verankerungsmittel ebenfalls unter (mechanischer) Spannung, da es an einem unteren Ende 132 der Rückenlehne (zweiter Abschnitt) 102 angeordnet, konkret (als optionales Merkmal) eingehakt, ist. Erste und zweite Konfiguration haben also gemein, dass in beiden Konfigurationen das erste Verankerungsmittel 120 unter (mechanischer) Spannung steht, unterscheiden sich aber dadurch, dass im Falle der ersten Konfiguration das Verankerungsmittel 120 am Kindersitz (konkret dem unteren Ende 132) gehalten ist und im Falle der zweiten Konfiguration in Bezug auf den Kindersitz (nur) extern (z.B. an einem Verankerungspunkt des Fahrzeugs) gehalten ist.

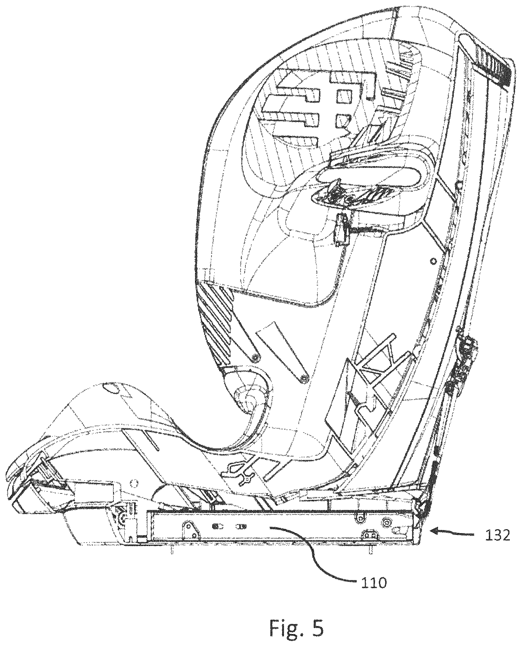

Weiterhin ist in Fig. 5 erkennbar, dass das erste Verankerungsmittel 120 einen Verfahrweg des zweiten Verankerungsmittels 110 (konkret einen (Isofix-)Arm des zweiten Verankerungsmittels 110) blockiert, so dass es die Stellung gemäß Fig. 1 nicht erreichen kann und damit keine Verankerung mit dem zweiten Gegenstück 21 herstellen kann. Damit ist also das zweite Verankerungsmittel 110 in der ersten Konfiguration des ersten Verankerungsmittels 120 blockiert.

In der dritten Konfiguration gemäß Fig. 6-9 wiederum ist das Befestigungsmittel 121 des ersten Verankerungsmittels 120 frei (also weder am Fahrzeug noch am Kindersitz gehalten), so dass die Feder(einrichtung) 130 eine andere Stellung (abweichend von Fig. 1-6) einnimmt. Diese abweichende Stellung kann dann ebenfalls entsprechend detektiert werden, so dass beispielsweise eine für den Benutzer erkennbare Indikation (Alarm und/oder optische Anzeige) erfolgen kann. Die dritte Konfiguration des ersten Verankerungsmittels 120 unterscheidet sich damit von der ersten Konfiguration und der zweiten Konfiguration insbesondere dadurch, dass das erste Verankerungsmittel unter keiner (ausreichenden) (mechanischen) Spannung steht (was mit dem zusätzlichen Unterschied verknüpft ist, dass das erste Befestigungsmittel 121 des ersten Verankerungsmittels 120 frei ist).

Zusammenfassend ergibt sich also ausführungsgemäß:
- Erste Konfiguration:: erstes Verankerungsmittel unter Spannung (bzw. Spannung größer oder gleich Schwellenwert); zweites Verankerungsmittel wird blockiert.
- Zweite Konfiguration:: erstes Verankerungsmittel unter Spannung (bzw. Spannung größer oder ggf., in einer ersten Alternative, gleich Schwellenwert); zweites Verankerungsmittel wird nicht blockiert.
- Dritte Konfiguration:: erstes Verankerungsmittel nicht unter Spannung (bzw. Spannung kleiner oder ggf., in einer zweiten Alternative, gleich Schwellenwert); zweites Verankerungsmittel wird nicht blockiert.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Fahrzeugsitz
- 11: Sitzfläche
- 12: Rückenlehne
- 20: Erstes Gegenstück
- 21: Zweites Gegenstück
- 100: Kindersitz
- 101: Erster Abschnitt
- 102: Zweiter Abschnitt
- 110: Zweites (unteres) Verankerungsmittel
- 111: Zweites Befestigungsmittel
- 120: Erstes (oberes) Verankerungsmittel
- 121: Erstes Befestigungsmittel
- 130: Feder
- 131: Bewegliches Element (Bügel)
- 132: Unteres Ende
- 133: Federabstützabschnitt

## Patentansprüche

1. Kindersitz (100) zur Anbringung auf einem Kraftfahrzeugsitz, umfassend ein erstes Verankerungsmittel (120) zur Verankerung des Kindersitzes (100) und/oder einer Sitzeinheit des Kindersitzes (100) und ein zweites Verankerungsmittel (110) zur Verankerung des Kindersitzes (100) und/oder der Sitzeinheit des Kindersitzes (100),
wobei das erste Verankerungsmittel (120) ein oberes Verankerungsmittel und das zweite Verankerungsmittel (110) ein unteres Verankerungsmittel bilden oder das erste Verankerungsmittel (120) ein unteres Verankerungsmittel und das zweite Verankerungsmittel (100) ein oberes Verankerungsmittel bilden,
**dadurch gekennzeichnet, dass**
das erste Verankerungsmittel (120) ausgebildet ist, so dass es mindestens eine erste und eine zweite Konfiguration einnehmen kann, wobei bei Einnahme der ersten Konfiguration durch das erste Verankerungsmittel (120) eine Verankerung des zweiten Verankerungsmittels (110) blockiert ist.

2. Kindersitz nach Anspruch 1,
**dadurch gekennzeichnet, dass**
das erste Verankerungsmittel (120) ausgebildet ist, so dass es eine dritte Konfiguration einnehmen kann, wobei in der dritten Konfiguration des ersten Verankerungsmittels (120) eine Verankerung des zweiten Verankerungsmittels (110) vorzugsweise nicht blockiert ist, und/oder wobei das zweite Verankerungsmittel (110) ausgebildet ist, so dass es mindestens eine erste und eine zweite und ggf. eine dritte Konfiguration einnehmen kann, wobei in der dritten Konfiguration des zweiten Verankerungsmittels (110) eine Verankerung des zweiten Verankerungsmittels (110) vorzugsweise ermöglicht, insbesondere aber nicht realisiert, ist.

3. Kindersitz nach Anspruch 1 oder 2,
**dadurch gekennzeichnet, dass**
die erste und/oder dritte Konfiguration des ersten (120) und/oder zweiten (110) Verankerungsmittels eine Nicht-Benutzungskonfiguration ist und/oder die zweite Konfiguration des ersten und/oder zweiten Verankerungsmittels eine Benutzungskonfiguration ist.

4. Kindersitz nach einem der vorhergehenden Ansprüche,
**dadurch gekennzeichnet, dass**
das erste Verankerungsmittel (120) einen Gurt und/oder eine Top Tether mit einem Gurt, umfasst und/oder das zweite Verankerungsmittel (110) eine Verankerung mit mindestens einem Verankerungsarm, insbesondere eine Isofix-Verankerung, und/oder eine Gurt-Verankerung, insbesondere umfassend eine Gurtführung und/oder einen Gurt, vorzugsweise für ein Latch-System, umfasst.

5. Kindersitz nach einem der vorhergehenden Ansprüche,
**dadurch gekennzeichnet, dass**
Sensormittel, insbesondere mindestens ein Kontaktschalter, vorzugsweise Kippschalter, zur Feststellung, ob sich das erste (120) und/oder das zweite (110) Verankerungsmittel in der ersten und/oder zweiten und/oder, besonders bevorzugt, dritten Konfiguration befindet/befinden, vorgesehen sind.

6. Kindersitz nach einem der vorhergehenden Ansprüche,
**dadurch gekennzeichnet, dass**
eine Alarmeinrichtung vorgesehen ist, die vorzugsweise konfiguriert ist, einen Alarm zu generieren, wenn, ggf. nur wenn, sich das erste Verankerungsmittel in seiner dritten, insbesondere als Nicht-Benutzungskonfiguration ausgebildeten, Konfiguration befindet.

7. Kindersitz nach einem der vorhergehenden Ansprüche,
**dadurch gekennzeichnet, dass**
erstes (120) und/oder zweites (110) Verankerungsmittel konfiguriert sind, den Kindersitz (100) an dem Fahrzeug zu verankern und/oder der Kindersitz (100) eine Sitzeinheit und eine Basis aufweist, wobei erstes (120) und/oder zweites (110) Verankerungsmittel ggf. konfiguriert sind, die Sitzeinheit an der Basis zu verankern, und/oder wobei erstes (120) und/oder zweites (110) Verankerungsmittel ggf. konfiguriert sind, die Basis an dem Fahrzeug zu verankern.

8. Kindersitz (100) nach einem der vorhergehenden Ansprüche,
**dadurch gekennzeichnet, dass**
sich die Konfigurationen des jeweiligen Verankerungsmittels (120, 110) durch verschiedene mechanische Spannungen, insbesondere Gurtspannungen, unterscheiden und/oder sich durch verschiedene Stellungen mindestens eines Elements des jeweiligen Verankerungsmittels, insbesondere gegenüber einem weiteren Element des Verankerungsmittels (120, 110) und/oder einem weiteren Element außerhalb des Verankerungsmittels (120, 110), beispielsweise des Kindersitzes (100) und/oder Installationsortes, unterschieden.

9. Kindersitz nach einem der vorhergehenden Ansprüche,
**dadurch gekennzeichnet, dass**
mindestens ein erstes Befestigungsmittel (121) zum Befestigen des ersten Verankerungsmittels (120) am Fahrzeug und/oder der Basis vorgesehen ist, wobei das erste Befestigungsmittel (121) in einer ersten Stellung das zweite Verankerungsmittel (110) mittelbar oder unmittelbar blockiert und in einer zweiten Stellung nicht blockiert.

10. Kindersitz nach einem der vorhergehenden Ansprüche,
**dadurch gekennzeichnet, dass**
dem ersten Verankerungsmittel (120) eine Spannungseinbringungseinrichtung, insbesondere eine Gurtstraffeinrichtung, zugeordnet ist, zum Einbringen einer Spannung in das Verankerungsmittel, insbesondere bei dessen Verankerung.

11. Kraftfahrzeug mit einem Kindersitz nach einem der vorhergehenden Ansprüche.

12. Verwendung eines ersten Verankerungsmittels (120) eines Kindersitzes, nach einem der Ansprüche 1 bis 10, zum Beeinflussen, insbesondere Blockieren eines zweiten Verankerungsmittels (110) des Kindersitzes,
wobei das erste Verankerungsmittel ein oberes Verankerungsmittel und das zweite Verankerungsmittel ein unteres Verankerungsmittel bilden oder das erste Verankerungsmittel ein unteres Verankerungsmittel und das zweite Verankerungsmittel ein oberes Verankerungsmittel bilden.

13. Verfahren zum Installieren eines Kindersitzes (100), nach einem der vorhergehenden Ansprüche 1 bis 10, in einem Kraftfahrzeug, insbesondere nach Anspruch 11, wobei der Kindersitz ein erstes Verankerungsmittel (120) zur Verankerung des Kindersitzes (100) und/oder einer Sitzeinheit des Kindersitzes und ein zweites Verankerungsmittel (110) zur Verankerung des Kindersitzes (100) und/oder einer Sitzeinheit des Kindersitzes umfasst,
wobei das erste Verankerungsmittel (120) ein oberes Verankerungsmittel und das zweite Verankerungsmittel (110) ein unteres Verankerungsmittel bilden oder das erste Verankerungsmittel (120) ein unteres Verankerungsmittel und das zweite Verankerungsmittel (110) ein oberes Verankerungsmittel bilden,
**dadurch gekennzeichnet, dass**
das zweite Verankerungsmittel (110) zunächst derart blockiert ist, dass eine Verankerung desselben verhindert wird, wobei daraufhin eine Konfigurationsänderung des ersten Verankerungsmittels (120) erfolgt, so dass die Verankerung des zweiten Verankerungsmittels (110) nicht mehr verhindert wird.

## Claims

1. Child seat (100) for attaching to a motor vehicle seat, comprising a first anchoring means (120) for anchoring the child seat (100) and/or a seat unit of the child seat (100), and a second anchoring means (110) for anchoring the child seat (100) and/or the seat unit of the child seat (100),
wherein the first anchoring means (120) forms an upper anchoring means and the second anchoring means (110) forms a lower anchoring means, or the first anchoring means (120) forms a lower anchoring means and the second anchoring means (100) forms an upper anchoring means,
**characterized in that**
the first anchoring means (120) is designed such that it can adopt at least one first and a second configuration, wherein when the first anchoring means (120) adopts the first configuration, an anchoring of the second anchoring means (110) is blocked.

2. Child seat according to claim 1,
**characterized in that**
the first anchoring means (120) is designed such that it can adopt a third configuration, wherein in the third configuration of the first anchoring means (120) an anchoring of the second anchoring means (110) is preferably not blocked, and/or wherein the second anchoring means (110) is designed such that it can adopt at least a first and a second and optionally a third configuration, wherein in the third configuration of the second anchoring means (110) an anchoring of the second anchoring means (110) is preferably enabled, but in particular not realized.

3. Child seat according to claim 1 or 2,
**characterized in that**
the first and/or third configuration of the first (120) and/or second (110) anchoring means is a non-use configuration and/or the second configuration of the first and/or second anchoring means is a use configuration.

4. Child seat according to one of the preceding claims,
**characterized in that**
the first anchoring means (120) comprises a belt and/or a top tether with a belt, and/or the second anchoring means (110) comprises an anchorage having at least one anchoring arm, in particular an Isofix anchorage, and/or a belt anchorage, in particular comprising a belt guide and/or a belt, preferably for a latch system.

5. Child seat according to one of the preceding claims,
**characterized in that**
sensor means, in particular at least one contact switch, preferably toggle switch, are provided for determining whether the first (120) and/or the second (110) anchoring means is/are in the first and/or second and/or, particularly preferably, third configuration.

6. Child seat according to of the preceding claims,
**characterized in that**
an alarm device is provided, which is preferably configured to generate an alarm if, optionally only if, the first anchoring means is in its third configuration, in particular designed as a non-use configuration.

7. Child seat according to one of the preceding claims,
**characterized in that**
first (120) and/or second (110) anchoring means are configured to anchor the child seat (100) to the vehicle and/or the child seat (100) comprises a seat unit and a base, wherein first (120) and/or second (110) anchoring means are optionally configured to anchor the seat unit to the base, and/or wherein first (120) and/or second (110) anchoring means are optionally configured to anchor the base to the vehicle.

8. Child seat (100) according to one of the preceding claims, **characterized in that**
the configurations of the respective anchoring means (120, 110) differ by different mechanical tensions, in particular belt tensions, and/or differ by different positions of at least one element of the respective anchoring means, in particular with respect to a further element of the anchoring means (120, 110) and/or a further element outside the anchoring means (120, 110), for example the child seat (100) and/or installation site.

9. Child seat according to one of the preceding claims,
**characterized in that**
at least one first fastening means (121) is provided for fastening the first anchoring means (120) to the vehicle and/or the base, wherein the first fastening means (121) indirectly or directly blocks the second anchoring means (110) in a first position and does not block it in a second position.

10. Child seat according to one of the preceding claims,
**characterized in that**
the first anchoring means (120) is associated with a tension application device, in particular a belt tightening device, for applying a tension to the anchoring means, in particular when anchoring it.

11. Motor vehicle comprising a child seat according to one of the preceding claims.

12. Use of a first anchoring means (120) of a child seat, according to one of claims 1 to 10, for influencing, in particular blocking, a second anchoring means (110) of the child seat,
wherein the first anchoring means forms an upper anchoring means and the second anchoring means forms a lower anchoring means, or the first anchoring means forms a lower anchoring means and the second anchoring means forms an upper anchoring means.

13. Method for installing a child seat (100), according to one of the preceding claims 1 to 10, in a motor vehicle, in particular according to claim 11, wherein the child seat comprises a first anchoring means (120) for anchoring the child seat (100) and/or a seat unit of the child seat and a second anchoring means (110) for anchoring the child seat (100) and/or a seat unit of the child seat, wherein the first anchoring means (120) forms an upper anchoring means and the second anchoring means (110) forms a lower anchoring means or the first anchoring means (120) forms a lower anchoring means and the second anchoring means (110) forms an upper anchoring means, **characterized in that**
the second anchoring means (110) is initially blocked in such a way that anchoring thereof is prevented, wherein thereupon a configuration change of the first anchoring means (120) takes place so that anchoring of the second anchoring means (110) is no longer prevented.

## Revendications

1. Siège pour enfant (100) destiné à être installé sur un siège de véhicule automobile, comprenant un premier moyen d'ancrage (120) servant à ancrer le siège pour enfant (100) et/ou une unité de siège du siège pour enfant (100) et un deuxième moyen d'ancrage (110) servant à ancrer le siège pour enfant (100) et/ou l'unité de siège du siège pour enfant (100),
le premier moyen d'ancrage (120) formant un moyen d'ancrage supérieur et le deuxième moyen d'ancrage (110) formant un moyen d'ancrage inférieur ou le premier moyen d'ancrage (120) formant un moyen d'ancrage inférieur et le deuxième moyen d'ancrage (100) formant un moyen d'ancrage supérieur,
**caractérisé en ce que**
le premier moyen d'ancrage (120) est conçu de telle sorte qu'il peut prendre au moins une première et une deuxième configuration, dans lequel, lorsque le premier moyen d'ancrage (120) prend la première configuration, un ancrage du deuxième moyen d'ancrage (110) est bloqué.

2. Siège pour enfant selon la revendication 1,
**caractérisé en ce que**
le premier moyen d'ancrage (120) est conçu de sorte qu'il peut prendre une troisième configuration, dans lequel, dans la troisième configuration du premier moyen d'ancrage (120), un ancrage du deuxième moyen d'ancrage (110) n'est de préférence pas bloqué, et/ou dans lequel le deuxième moyen d'ancrage (110) est conçu de sorte qu'il peut prendre au moins une première et une deuxième, et le cas échéant une troisième configuration, dans lequel, dans la troisième configuration du deuxième moyen d'ancrage (110), un ancrage du deuxième moyen d'ancrage (110) est de préférence possible, mais en particulier non réalisé.

3. Siège pour enfant selon la revendication 1 ou 2,
**caractérisé en ce que**
la première et/ou la troisième configuration des premier (120) et/ou deuxième (110) moyens d'ancrage est une configuration de non-utilisation et/ou la deuxième configuration du premier et/ou du deuxième moyen d'ancrage est une configuration d'utilisation.

4. Siège pour enfant selon l'une quelconque des revendications précédentes, **caractérisé en ce que**
le premier moyen d'ancrage (120) comprend une ceinture et/ou un Top Tether avec une ceinture et/ou le deuxième moyen d'ancrage (110) comprend un ancrage avec au moins un bras d'ancrage, en particulier un ancrage Isofix, et/ou un ancrage de ceinture, comprenant en particulier un guide de ceinture et/ou une ceinture, de préférence pour un système Latch.

5. Siège pour enfant selon l'une quelconque des revendications précédentes, **caractérisé en ce que**
des moyens de détection, en particulier au moins un commutateur de contact, de préférence un commutateur à bascule, sont prévus pour déterminer si le premier (120) et/ou le deuxième (110) moyen(s) d'ancrage se trouve/se trouvent dans la première et/ou la deuxième et/ou, mieux encore, dans la troisième configuration.

6. Siège pour enfant selon l'une quelconque des revendications précédentes, **caractérisé en ce qu'**
un dispositif d'alarme est prévu, qui est de préférence configuré pour générer une alarme lorsque, le cas échéant seulement lorsque, le premier moyen d'ancrage se trouve dans sa troisième configuration, conçue notamment comme une configuration de non-utilisation.

7. Siège pour enfant selon l'une quelconque des revendications précédentes, **caractérisé en ce que**
les premier (120) et/ou deuxième (110) moyens d'ancrage sont configurés pour ancrer le siège pour enfant (100) au véhicule et/ou le siège pour enfant (100) présente une unité de siège et une base, les premier (120) et/ou deuxième (110) moyens d'ancrage étant éventuellement configurés pour ancrer l'unité de siège à la base, et/ou les premier (120) et/ou deuxième (110) moyens d'ancrage étant éventuellement configurés pour ancrer la base au véhicule.

8. Siège pour enfant (100) selon l'une quelconque des revendications précédentes,
**caractérisé en ce que**
les configurations du moyen d'ancrage respectif (120, 110) se distinguent par différentes tensions mécaniques, en particulier des tensions de ceinture, et/ou se distinguent par différentes positions d'au moins un élément du moyen d'ancrage respectif, en particulier par rapport à un autre élément du moyen d'ancrage (120, 110) et/ou un autre élément en dehors du moyen d'ancrage (120, 110), par exemple du siège pour enfant (100) et/ou du lieu d'installation.

9. Siège pour enfant selon l'une quelconque des revendications précédentes, **caractérisé en ce qu'**
au moins un premier moyen de fixation (121) est prévu pour fixer le premier moyen d'ancrage (120) au véhicule et/ou à la base, le premier moyen de fixation (121) bloquant directement ou indirectement le deuxième moyen d'ancrage (110) dans une première position et ne le bloquant pas dans une deuxième position.

10. Siège pour enfant selon l'une quelconque des revendications précédentes, **caractérisé en ce qu'**
un dispositif d' application de tension, en particulier un dispositif de tension de ceinture, est associé au premier moyen d'ancrage (120) pour appliquer une tension au moyen d'ancrage, en particulier lors de son ancrage.

11. Véhicule automobile équipé d'un siège pour enfant selon l'une quelconque des revendications précédentes.

12. Utilisation d'un premier moyen d'ancrage (120) d'un siège pour enfant, selon l'une quelconque des revendications 1 à 10, afin d'influencer, notamment bloquer, un deuxième moyen d'ancrage (110) du siège pour enfant,
le premier moyen d'ancrage formant un moyen d'ancrage supérieur et le deuxième moyen d'ancrage formant un moyen d'ancrage inférieur ou le premier moyen d'ancrage formant un moyen d'ancrage inférieur et le deuxième moyen d'ancrage formant un moyen d'ancrage supérieur.

13. Procédé d'installation d'un siège pour enfant (100), selon l'une quelconque des revendications précédentes 1 à 10, dans un véhicule automobile, notamment selon la revendication 11, dans lequel le siège pour enfant comprend un premier moyen d'ancrage (120) servant à ancrer le siège pour enfant (100) et/ou une unité de siège du siège pour enfant et un deuxième moyen d'ancrage (110) servant à ancrer le siège pour enfant (100) et/ou une unité de siège du siège pour enfant,
le premier moyen d'ancrage (120) formant un moyen d'ancrage supérieur et le deuxième moyen d'ancrage (110) formant un moyen d'ancrage inférieur ou le premier moyen d'ancrage (120) formant un moyen d'ancrage inférieur et le deuxième moyen d'ancrage (110) formant un moyen d'ancrage supérieur,
**caractérisé en ce que**
le deuxième moyen d'ancrage (110) est d'abord bloqué de telle sorte qu'un ancrage de celui-ci est empêché, une modification de la configuration du premier moyen d'ancrage (120) étant ensuite effectuée de telle sorte que l'ancrage du deuxième moyen d'ancrage (110) n'est plus empêché.
